Europäisches Patentamt

European Patent Office

Office européen des brevets

(11) Veröffentlichungsnummer: **0 151 454 B1**

(12) **EUROPÄISCHE PATENTSCHRIFT**

(45) Veröffentlichungstag der Patentschrift: **14.08.91**

(21) Anmeldenummer: **85100882.1**

(22) Anmeldetag: **29.01.85**

(51) Int. Cl.⁵: **H04Q 11/04, H04B 10/00, H04M 11/00, H04M 11/06**

(54) Breitbandiges integriertes Teilnehmeranschlusssystem.

(30) Priorität: **03.02.84 DE 3403659**

(43) Veröffentlichungstag der Anmeldung:
**14.08.85 Patentblatt 85/33**

(45) Bekanntmachung des Hinweises auf die
Patenterteilung:
**14.08.91 Patentblatt 91/33**

(84) Benannte Vertragsstaaten:
**AT BE CH DE FR GB IT LI LU NL SE**

(56) Entgegenhaltungen:
**EP-A- 0 020 878**
**EP-A- 0 024 618**

**NACHRICHTENTECHNISCHE ZEITSCHRIFT**
**N.T.Z., Band 27, Nr. 8, August 1974, Seiten 283-291, Berlin, DE; K.D. SCHENKEL: "Ein integriertes 300-Mbit/s- Zeitmultiplex-Nachrichtensystem mit dezentraler Vermittlung"**

**NACHRICHTENTECHNISCHE ZEITSCHRIFT**
**N.T.Z., Band 37, Nr. 12, Dezember 1984, Seiten 778-784; Berlin, DE; H. OHNSORGE: "Bigfon und seine Nutzungsmöglichkeiten"**

(73) Patentinhaber: **Standard Elektrik Lorenz Aktiengesellschaft**
**Lorenzstrasse 10**
**W-7000 Stuttgart 40(DE)**

(72) Erfinder: **Ohnsorge, Horst, Dr.**
**Zeller Strasse 4**
**W-7141 Freiberg a.N.(DE)**

(74) Vertreter: **Kugler, Hermann, Dipl.-Phys. et al**
**Standard Elektrik Lorenz AG Patent- und Lizenzwesen Postfach 30 09 29**
**W-7000 Stuttgart 30(DE)**

## Beschreibung

Die Erfindung betrifft ein Übertragungssystem nach dem Oberbegriff des Patentanspruchs 1.

Ein Übertragungssystem, das unter anderem die dort angeführten Merkmale enthält, ist bekannt aus der EP-B-0 024 618. Bei diesem System ist die Vermittlungsstelle sternförmig über jeweils einen oder zwei Lichtwellenleiter mit den Teilnehmern verbunden. Jeder von der Vermittlungsstelle zu einem Teilnehmer führende Lichtwellenleiter stellt einen Kanal dar, in dem Signale für mehrere Telekommunikationsdienste im Multiplex übertragbar sind. Es ist also jedem Teilnehmer genau ein Kanal für die Signalübertragung in Richtung von der Vermittlungsstelle zum Teilnehmer und genau ein solcher Kanal für die Signalübertragung in umgekehrter Richtung zugeordnet.

In Richtung von der Vermittlungsstelle zu den Teilnehmern geschieht die Signalübertragung in dem für jeweils einen Teilnehmer dazu eingerichteten Kanal, d.h. Lichtwellenleiter, wie folgt:
Die Signale der Kanäle eines integrierten Sprach- und Datennetzes (ISDN) werden in digitaler Form (jeweils 64 kbit/s) übertragen, und die Signale der übrigen Telekommunikationsdienste wie Fernsehen, Stereorundfunk und Bildfernsprechen in analoger Form. Als Multiplexverfahren zur Übertragung der Signale dieser Telekommunikationsdienste wird folglich ein Frequenzmultiplexverfahren angewendet.

Beim Teilnehmer wird das empfangene Multiplexsignal in die Stereotonsignale und Fernsehsignale und die Signale der übrigen Telekommunikationsdienste aufgetrennt. Die Fernseh- und Stereotonsignale werden über eine gemeinsame Koaxialleitung zu mehreren Anschlußstellen innerhalb der Wohnung des Teilnehmers geführt und können dort selektiv zu den Endgeräten wie Fernseh- und Stereotonempfänger verzweigt werden.

Die Signale der anderen Dienste werden durch ein nicht gezeigtes unabhängiges Leitungsnetz auf die verschiedenen Endgeräte beim Teilnehmer verteilt.

In der Richtung von den Teilnehmern zu der Vermittlungsstelle geschieht die Signalübertragung in dem hierzu für jeweils einen Teilnehmer eingerichteten Kanal, d.h. dem Lichtwellenleiter, indem mehrere Signale (unterschiedliche Kommunikationsdienste) digital und im Zeitmultiplex übertragen werden.

Dieses System hat also für jeden Teilnehmer genau zwei Kanäle, die durch einen oder zwei Lichtwellenleiter mit den dazugehörigen Übertragungseinrichtungen realisiert sind. Alle diese optischen Übertragungseinrichtungen und Lichtwellenleiter sind einheitlich für die maximal vorgesehene Übertragungskapazität ausgelegt, wobei nicht berücksichtigt ist, daß verschiedene Teilnehmer sehr unterschiedliche Kommunikationsbedürfnisse haben.

Es ist die Aufgabe der Erfindung, ein Übertragungssystem für den Teilnehmeranschlußbereich anzugeben, das kostengünstiger als das bekannte System realisierbar ist und das entsprechend den unterschiedlichen und unterschiedlich wachsenden Kommunikationsbedürfnissen der Teilnehmer auslegbar ist.

Die Aufgabe wird wie im Patentanspruch 1 angegeben gelöst. Weiterbildungen ergeben sich aus den Unteransprüchen.

Die erfindungsgemäße Lösung hat den Vorteil, daß sie die nachstehend aufgeführten Forderungen erfüllt, die in ihrer Gesamtheit von keinem der bekannten Systeme erfüllt werden:

1. Dienstintegration:

Das System ist dienstintegriert, weil folgende Telekommunikationsdienste abgewickelt werden können:
Daten- und Sprachübertragung (ISDN), Tonrundfunkübertragung (Stereotonübertragung) und interaktives Kabelfernsehen, Telekonferenzen und Bildfernsprechen.

2. Modularität:

Die Telekommunikationsdienste können unabhängig voneinander realisiert werden.

3. Wirtschaftlichkeit:

Jeder Dienst ist unabhängig vom anderen wirtschaftlich konkurrenzfähig mit konventionellen Lösungen, und die Gesamtheit der Dienste ist wirtschaftlich kostengünstiger realisierbar als die Einzeldienste nach bekannten Verfahren.

4. Zukunftssicherheit:

Das System ist zukunftssicher, flexibel und ausbaufähig.

5. Übermittlungsqualität:

Das System liefert eine sehr hohe Qualität der Signalübertragung.

6. Realisierbarkeit:

Das System ist mit vorhandenen Technologien realisierbar.

Im Zuge der nachstehenden Beschreibung wird angegeben, durch welche Lösungsmaßnahmen die vorstehend aufgeführten vorteilhaften Eigenschaften des Systems erreicht werden.

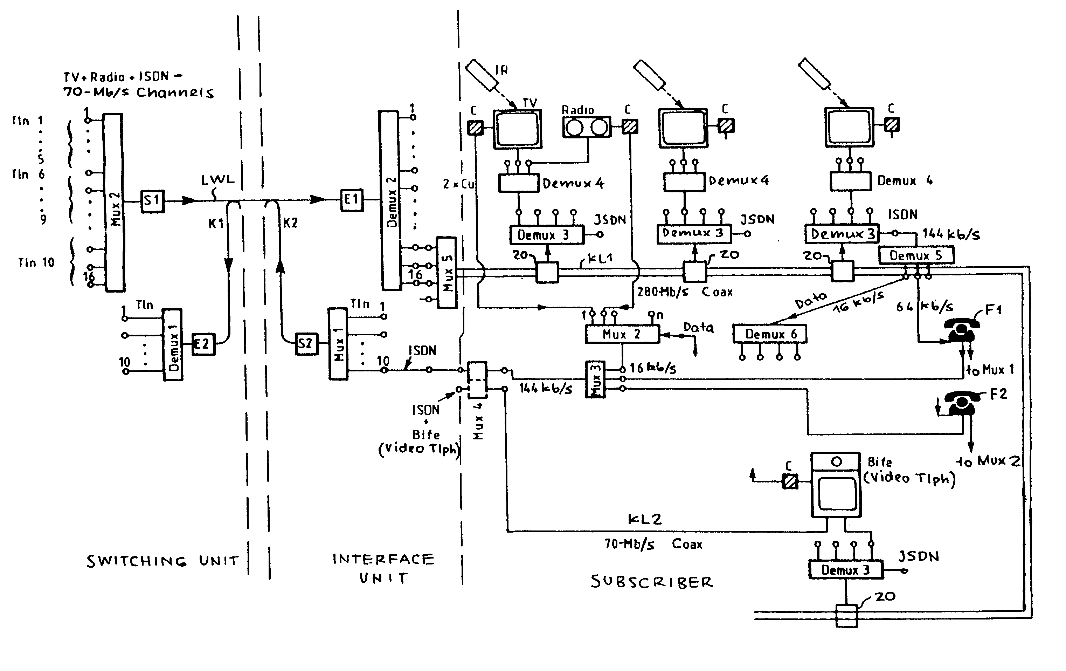

Die Erfindung wird nun anhand einer einzigen Zeichnung erläutert. Diese zeigt in schematischer Darstellung ein Ausführungsbeispiel des erfindungsgemäßen Systems.

Zwischen einer Vermittlungsstelle und jedem an sie angeschlossenen Teilnehmer ist mindestens ein Breitbandkanal eingerichtet, in dem Signale für mehrere Telekommunikationsdienste zum Teilnehmer übertragbar sind, beispielsweise die Signale für Fernsehübertragung, für Stereotonübertragung, für integrierte Sprach- und Datenübertragung (ISDN) für Telekonferenzen und Bildfernsprechen. Ein solcher Kanal hat beispielsweise eine Bitfolgefrequenz von 70 Mbit/s. Sämtliche Signale, die in diesem Kanal zusammengefaßt werden, sind Digitalsignale, und die Zusammenfassung geschieht im Zeitmultiplex.

Eine für die verschiedenen angeführten Telekommunikationsdienste eingerichtete Vermittlung enthält einen Multiplexer Mux 2, der z. B. 16 derartige Kanäle, die insgesamt beispielsweise einer Gruppe von zehn Teilnehmern zugeordnet sind, durch Zeitmultiplexbildung zu einem Bitstrom von z. B. 1,12 Gbit/s zusammenfaßt. Ein optischer Sender S1 mit einer Wellenlänge $\lambda_1$ setzt diesen Bitstrom in ein optisches Signal um, das über einen Lichtwellenleiter LWL zu einem optischen Empfänger E1 übertragen und durch einen Demultiplexer Demux 2 wieder in die 16 Kanäle aufgeteilt wird. Der optische Empfänger und der Demultiplexer 2 befinden sich an einem Übergabepunkt, der sich in der Nähe der zehn Teilnehmer befindet, denen die Gesamtheit der 16 Kanäle zugeordnet ist. Dieser Übergabepunkt kann sich z. B. im Keller eines Mehrfamilienhauses befinden, in dem die zehn Teilnehmer ihre Wohn- und Geschäftsräume haben.

Hierdurch ergibt sich die Wirtschaftlichkeit des Systems, da die Kosten für die optische Übertragungsstrecke nicht für jeden Teilnehmer, sondern jeweils nur für zehn Teilnehmer auf zuwenden sind.

Die Aufteilung der der Gruppe von zehn Teilnehmern insgesamt zugeordneten 16 Kanäle auf die einzelnen Teilnehmer richtet sich nach deren individuellen Kommunikationsbedürfnissen.

Im gezeigten Beispiel genügt den Teilnehmern 1 bis 5 jeweils ein einziger Kanal, wogegen die Teilnehmer 6 bis 9 jeweils zwei Kanäle und der Teilnehmer 10 sogar drei Kanäle braucht. Mehr als einen Kanal benötigt ein Teilnehmer dann, wenn er für irgendeinen der Telekommunikationsdienste mehr Übertragungskapazität zur Verfügung haben will, als ein Kanal sie für diesen Dienst bietet. Wenn in einem Kanal beispielsweise Übertragungskapazität für nur ein Fernsehprogramm neben Übertragungskapazität für andere Dienste vorhanden ist und ein Teilnehmer in seiner Wohnung drei Fernsehempfänger gleichzeitig mit drei verschiedenen Programmen betreiben will, so benötigt er drei der 16 Kanäle für sich allein.

Im gezeigten Ausführungsbeispiel hat der Teilnehmer 10 drei Kanäle. Vom Übergabepunkt werden die einem Teilnehmer jeweils zugeordneten Kanäle sternförmig den Teilnehmern 1 bis 10 zugeführt, wobei in der Zeichnung lediglich die Versorgung eines einzigen dieser Teilnehmer gezeigt ist. Die diesem Teilnehmer zugeordneten drei Kanäle werden am Übergabepunkt mittels eines Multiplexers Mux 5 zu einem Teilnehmer-Zeitmultiplexsignal zusammengefaßt, dessen Bitfolgefrequenz beispielsweise 280 Mbit/s beträgt. Dieses digitale Zeitmultiplexsignal wird über eine elektrische Koaxialleitung KL¹ zu den Wohnräumen und/oder Geschäftsräumen des Teilnehmers übertragen. Diese Koaxialleitung KL1 verläuft beim Teilnehmer durch mehrere Räume hindurch, in denen der Anschluß von Endgeräten für irgendeinen der Telekommunikationsdienste vorgesehen ist. An beliebigen Stellen der Koaxialleitung in Räumen, wo eines oder mehrere Endgeräte angeschlossen werden sollen, enthält die Koaxialleitung Anschlußstellen 20, an denen das Zeitmultiplexsignal abgegriffen und einem Demultiplexer Demux 3 zugeführt wird, der dem Zeitmultiplexsignal jeweils die Signale für die bei dieser Anschlußstelle vorgesehenen Endgeräte entnimmt. Hierfür gibt es entweder die Möglichkeit,daß die an eine Verzweigungseinrichtung 20 angeschlossenen Demultiplexer jeweils den bei dieser Anschlußstelle vorgesehenen Endgeräten angepaßt sind, so daß sie nur die Signale für diese Endgeräte und nicht für die anderen Telekommunikationsdienste entnehmen oder daß sämtliche Demultiplexer einheitlich aufgebaut sind und das Zeitmultiplexsignal gegebenenfalls in mehreren Stufen in die Signale der verschiedenen Telekommunikationsdienste aufspalten. Im gezeigten Beispiel spalten einheitliche an verschiedene Verzweigungseinrichtungen angeschlossene Demultiplexer Demux 3 das Zeitmultiplexsignal in verschiedene Fernseh- und Tonprogrammsignale und ein ISDN-Signal auf. Die weitere Aufspaltung der von den Demuliplexern Demux 3 gelieferten Fernseh- und Tonsignale besorgen einheitliche Demultiplexer Demux 4, die verschiedenen Ausgängen der Demultiplexer Demux 3 nachgeschaltet sind, und die in jedem gezeigten Fall ein Fernsehempfangsgerät TV mit jeweils einem Fernsehprogramm und in einem Fall zusätzlich ein Stereotonempfangsgerät, als Radio bezeichnet, mit einem digitalen Stereotonprogramm ver-Sorgen. Das an einem mit ISDN bezeichneten Ausgang der Demultiplexer Demux 3 erscheinende Signal mit der für ISDN typischen Bitfolgefrequenz von 144 kBit/s ist mittels eines Demultiplexers Demux 5 an der Anschlußstelle, an der Fernsprechgeräte und Datenendgeräte vorhanden sind, in digitale Fernsprechsignale mit jeweils 64 kbit/s und in Datensignale mit einer Bitfolgefrequenz mit 16 kbit/s zerlegbar . Die digitalen Fernsprechsignale gelangen zu digitalen Fernsprechapparaten F1 und F2, wogegen die Daten auf einen Daten-Demuliplexer Demux 6 gelangen, der sie auf verschiedene nicht dargestellte Datenendgeräte aufteilt. An einem der Ausgänge der Demultiplexer Demux 3 erscheint das zur Abwicklung des Bildfernsprechens vorgesehene Empfangssignal für ein Bildfernsprech-Endgerät (Bife).

Zur Übertragung von verschiedenen Steuer- und Nachrichtensignalen von den Endgeräten bei einem Teilnehmer zum Übergabepunkt sind

gewöhnliche elektrische Leitungen in Form von Kupfer-Doppeladern und mehrere Multiplexer vorhanden, die im folgenden erläutert werden. Alle Fernseh- und Stereotonempfangsgeräte sowie die Bildfernsprech-Endgeräte (Bife) sind mit einem Codierer C ausgestattet, der, gesteuert durch einen Infrarot-Sender IR oder durch Tastenbetätigung Programmwahlsignale oder sonstige Steuersignale aussendet, die von diesem Teilnehmer zur Vermittlung zu übertragen sind. Ein Multiplexer Mux 2 faßt die von den einzelnen Codierern C über die Kupfer-Doppeladern zu ihm übertragenen Programmwahl- und Steuersignale sowie Wahlsignale von den digitalen Fernsprechapparaten F1 und F2 und Daten von nicht gezeigten Datenendgeräten zu einem Bitstrom von 16 kbit/s zusammen. Ein Multiplexer Mux 3 faßt die digitalen Fernsprechsignale (je64 kbit/s) und den Ausgangsdatenstrom von Mux 2 (16 kbit/s) zu der ISDN-Bitfolgefrequenz von 144 kbit/s zusammen. Falls der Teilnehmer eine Bildfernsprech-Endeinrichtung besitzt, wird deren Ausgangssignal mit 70 Mbit/s über eine Koaxialleitung KL2 zu einem Multiplexer Mux 4 übertragen, der das Bildfernsprechsignal und das Ausgangssignal des Multiplexers Mux 3 zu einem Datenstrom von 70 Mbit/s zusammenfaßt, das an dem mit ISDN + Bife bezeichneten Ausgang des Multiplexers erscheint.

Das Ausgangssignal des Multiplexers Mux 4 dieses Teilnehmers, entweder mit der ISDN-Bitfolgefrequenz von 144 kbit/s oder mit der ISDN/Bife-Bitfolgefrequenz von 70 Mbit/s, wird vom Teilnehmer zum Übergabepunkt übertragen. Dort faßt ein Multiplexer Mux 1 die jeweils entsprechend gebildeten Signale von allen zehn Teilnehmern der Gruppe zu einem Bitstrom von z. B. 140 oder 560 Mbit/s oder 1,12 Gbits, je nach Anzahl und Bitfolgefrequenz der von den Teilnehmern zur Vermittlung zu übertragenden Steuer- und Nachrichtensignale , zusammen. Dieser Bitstrom wird dann durch einen optischen Sender S2 in ein optisches Signal umgesetzt, dieses mittels eines faseroptischen Kopplers K2 in den Lichtwellenleiter LWL eingekoppelt, in der Vermittlung mittels eines Faserkopplers K1 ausgekoppelt, einem optischen Empfänger E2 zugeführt, dessen Ausgang mit dem Eingang eines Demultiplexers Demux 1 verbunden ist.Der Demultiplexer-Demux 1 zerlegt das Rückkanal-Multiplexsignal in die von den einzelnen Teilnehmern stammenden Signale, die ein nicht gezeigter Demultiplexer jeweils in Signale für die verschiedenen Telekommunikationsdienste aufspaltet. Diese Signale werden von der Vermittlung entweder vermittelt oder zur Steuerung benutzt, beispielsweise die Programmwahlsignale zur Steuerung der teilnehmerindividuellen Programmvermittlung.

Die Übertragung des Rückkanal-Multiplexsignals vom Übergabepunkt zur Vermittlung über den Lichtwellenleiter LWL kann entweder im Wellenlängenmuliplex oder in Wellenlängengleichlage erfolgen. Anstatt der bidirektionellen Übertragung über den Lichtwellenleiter LWL kann auch ein zweiter Lichtwellenleiter zur Übertragung des Rückkanal-Zeitmultiplexsignals vom Übergabepunkt zur Vermittlung verwendet werden.

Als Bitfolgefrequenz für die den Teilnehmern zugeordneten Kanäle kann an Stelle der 70 Mbit/s auch 140 Mbit/s gewählt werden. Die Bitfolgefrequenz des von der Vermittlung zum Übergabepunkt über den Lichtwellenleiter LWL übertragenen Bitstroms kann statt wie angegeben 1,12 Gbit/s auch 2,24 Gbit/s betragen. Statt des beschriebenen und in der Zeichnung dargestellten Kupferleitungssternnetzes zur Zusammenfassung der Steuerungs- und Nachrichtensignale, die von den Endgeräten eines Teilnehmers zur Vermittlung zu übertragen sind, kann auch eine Kupferleitung installiert sein, die verschiedene in Reihe liegende Zugriffsstellen aufweist, in die die verschiedenen Endgeräte über geeignete Multiplexer ihre Signale im Vielfachzugriff einspeisen.

Falls die Übertragungskapazität des wie beschrieben betriebenen Lichtwellenleiters zur Abwicklung der verschiedenen Telekommunikationsdienste nicht ausreicht, kann der Lichtwellenleiter mittels weiterer optischer Sender und Empfänger im Wellenlängenmuliplex verwendet werden ebenso der gegebenenfalls für die Übertragung vom Übergabepunkt zur Vermittlung vorgesehene zweite Lichtwellenleiter. In diesen Fällen wäre die Multiplexübertragung eine Zeit- und Wellenlängenmultiplexübertragung.

Im folgenden werden noch einige Vorteile des beschriebenen Systems aufgezählt:
Keiner der im System integrierten Dienste ist von einem anderen abhängig:
Interaktives Kabelfernsehen funktioniert ohne ISDN oder Bildfernsprechen, und ISDN erfordert weder interaktive Kabelfernsehen noch Bildfernsprechen. Zur Wirtschaftlichkeit des Systems und zur Konkurrenzfähigkeit der einzelnen Dienste trägt bei, daß wegen der vollständig digitalen Übertragung von der Vermittlung bis zu den Endgeräten höchstintegrierte Schaltkreise anwendbar sind, daß in den Endgeräten auf jegliche analoge Signalaufbereitung verzichtet ist und daß als Zuleitungen und im Hause des Teilnehmers billige Kupferleiter und billige Abzweigschaltungen an den Anschlußstellen der Endgeräte verwendet werden können.

Die Zukunftssicherheit ist dadurch gegeben, daß der Lichtwellenleiter, insbesondere eine Monomodefaser, höchste Bitfolgefrequenzen gestattet. Daher kann die Anzahl der an den Lichtwellenleiter angeschlossenen Teilnehmer in weiten Grenzen geändert werden, und es können die Bitfolgefrequenzen im Kanal ebenfalls in weiten Grenzen geändert werden. Falls die bei einer Wellenlänge gegebene Übertragungskapazität des Lichtwellenleiters durch die Dispersion begrenzt wird und noch weiterer Bedarf an Übertragungskapazität besteht, können zusätzliche Signale im Wellenlängenmultiplex übertragen werden, so daß die Kapazität des optischen Übertragungssystems dadurch erheblich gesteigert werden kann.

Wegen der vollständig digitalen Signalübertragung mit hoher Bitfolgefrequenz von der Quelle bis zum Endgerät des Teilnehmers und wegen der Störunempfindlichkeit des Lichtwellenleiters wird eine äußert hohe Signalqualität erreicht. Zur Frage der Realisierbarkeit ist darauf zu verweisen, daß Systeme mit den genannten Bitfolgefrequenzen bereits in der Vergangenheit realisiert worden sind. Bis zu ca . 560 Mbit/s sind hochintegrierte Schaltkreise in Bipolartechnik, bis zur 14o Mbit/s in MOS-Technik bereits heute realisierbar.

**Patentansprüche**

1. Breitbandiges Übertragungssystem, bei dem zwischen einer Vermittlung und den Teilnehmern für beide Übertragungsrichtungen Kanäle eingerichtet sind, wobei in jedem Kanal Signale für mehrere Telekommunikationsdienste im Multiplex übertragbar sind und bei dem Teilnehmer Multiplexer (Mux 2, Mux 3, Mux 4) vorgesehen sind, um die von ihren Teilnehmer-Endgeräten (C, F2) zur Vermittlung zu übertragenden Signale als digitale Signale zu einem ersten Teilnehmer-Zeitmultiplexsignal zusammenzufassen,
dadurch gekennzeichnet, daß das Übertragungssystem derart ausgestaltet ist,
   - daß für die Signalübertragung von der Vermittlung zu den Teilnehmern jedem Teilnehmer (Tln 1 bis Tln 10), dessen Kommunikationsbedürfnissen entsprechend, mindestens ein Kanal zugeordnet ist,
   - daß in jedem Kanal die Signale der Telekommunikationsdienste digital und im Zeitmultiplex übertragen werden,
   - daß die Teilnehmer zu Gruppen zusammengefaßt sind,
   - daß für jede Gruppe von Teilnehmern die digitalen Signale der der Gruppe insgesamt zugeordneten Kanäle von der Vermittlung über einen einzigen Lichtwellenleiter (LWL) zu einem der Gruppe gemeinsamen Übergabepunkt (E1) als Multiplexsignal übertragen werden,
   - daß am Übergabepunkt das Multiplexsignal nach optisch-elektrischer Wandlung (E1) in die Kanäle aufgetrennt wird (Demux 2),
   - daß am Übergabepunkt die Signale der jeweils einem Teilnehmer zugeordneten Kanäle zu einem zweiten Teilnehmer-Zeitmultiplexsignal zusammengefaßt werden (Mux 5) und dieses Signal über eine teilnehmerindividuelle elektrische Leitung (KL 1) zum Teilnehmer und dort zu mindestens einer Anschlußstelle (20) übertragen wird, an der mittels Demultiplexern (Demux 3, Demux 4, Demux 5, Demux 6) die Signale für die bei der Anschlußstelle vorgesehenen Endgeräte abgreifbar sind,
   - daß das bei einem Teilnehmer gebildete erste Teilnehmer-Zeitmultiplexsignal zum Übergabepunkt übertragen wird,
   - daß am Übergabepunkt die ersten Teilnehmer-Zeitmultiplexsignale der Gruppe von Teilnehmern zu einem Rückkanal-Multiplexsignal zusammengefaßt werden (Mux 1), das ein optischer Sender (S2) als optisches Signal über einen Lichtwellenleiter (LWL) zur Vermittlung sendet, und
   - daß in der Vermittlung das empfangene optische Signal wieder in ein elektrisches Signal umgesetzt (E2) und durch Demultiplexer (Demux 1) in die Signale der Teilnehmer und deren Telekommunikationsdienste aufgetrennt wird.

2. System nach Anspruch 1, dadurch gekennzeichnet, daß die Signale der Kanäle von der Vermittlung zum Übergabepunkt im Zeitmultiplex oder im Zeit- und Wellenlängenmultiplex übertragen werden.

3. System nach Anspruch 1 oder 2, dadurch gekennzeichnet, daß die Anzahl der Teilnehmer einer Gruppe kleiner oder gleich der Anzahl der Kanäle ist, die dieser Gruppe von Teilnehmern für die Übertragunsgsrichtung von der Vermittlung zu den Teilnehmern zugeordnet sind.

4. System nach Anspruch 3, dadurch gekennzeichnet, daß die Anzahl der Teilnehmer einer Gruppe an die für die einzelnen Teilnehmer Geforderte Übertragungskapazität und Signalqualität angepaßt ist.

5. System nach einem der Ansprüche 1 bis 4, dadurch gekennzeichnet, daß zur Übertragung des Rückkanal-Zeitmultiplexsignals derselbe Lichtwellenleiter (LWL) verwendet ist, der auch zur Übertragung von der Vermittlung zum Übergabepunkt verwendet ist.

6. System nach einem der Ansprüche 1 bis 4, dadurch gekennzeichnet, daß zur Übertragung des Rückkanal-Zeitmultiplexsignals vom Übergabepunkt zur Vermittlung ein zweiter Lichtwellenleiter verwendet ist.

## Claims

1. Broadband communication system wherein between a switching unit and the subscribers, channels are provided for both directions of transmission over each of which signals for several telecommunication services can be transmitted on a multiplex basis, and wherein multiplexers (Mux 3, Mux 4) are provided at the subscriber for combining the signals to be transmitted as digital signals from the subscriber's terminals (C, F2) to the switching unit into a first subscriber time-division multiplex signal, **characterized in** that the communication system is so designed
   - that for signal transmission from the switching unit to the subscribers, each subscriber (Tln1-Tln10), in accordance with his communication needs, is assigned at least one channel,
   - that the signals of the telecommunication services are transmitted in each channel digitally using time-division multiplexing,
   - that the subscribers are combined in groups,
   - that for each group of subscribers, the digital signals of all channels assigned to the group are transmitted as a multiplex signal over a single optical waveguide (LWL) to an interface unit common to the group,
   - that in the interface unit, the multiplex signal, after being converted from optical to electrical form (E1), is separated (Demux 2) into the channels,
   - that in the interface unit, the signals of the channels assigned to a subscriber are combined (Mux 5) into a second subscriber time-division-multiplex signal which is transmitted over an electric subscriber line (KL1) to the subscriber and there to at least one tap (20) where the signals for the terminals associated with the tap can be tapped off via demultiplexers (Demux 3, Demux 4, Demux 5), Demux 6),
   - that the first subscriber time-division multiplex signal formed at a subscriber is transmitted to the interface unit,
   - that in the interface unit the first time-division-multiplex signals of the group of subscribers are combined (Mux 1) into a backward-channel multiplex signal which is transmitted by an optical transmitter (S2) as an optical signal over an optical waveguide (LWL) to the switching unit, and
   - that in the switching unit, the received optical signal is converted back (E2) to an electrical signal and separated by demultiplexers (Demux 1) into the signals and telecommunication services of the subscribers.

2. A system as claimed in claim 1, characterized in that the signals of the channels are transmitted from the switching unit to the interface unit using time-division multiplexing or time- and wavelength-division multiplexing.

3. A system as claimed in claim 1 or 2, characterized in that the number of subscribers of a group is less than or equal to the number of channels assigned to this group of subscribers for the direction of transmission from the switching unit to the subscribers.

4. A system as claimed in claim 3, characterized in that the number of subscribers of a group is adapted to the transmission capacity and signal quality required for the individual subscribers.

5. A system as claimed in any one of claims 1 to 4, characterized in that the backward-channel time-division-multiplex signal is transmitted through the same optical waveguide (LWL) as that used for transmission from the switching unit to the interface unit.

6. A system as claimed in any one of claims 1 to 4, characterized in that the backward-channel time-division-multiplex signal is transmitted from the interface unit to the switching unit through a second optical waveguide.

## Revendications

1. Système de transmission à large bande, dans lequel sont prévus des canaux entre un central et les abonnés pour les deux sens de transmission, des signaux pouvant être transmis en multiplex dans chaque canal, ces signaux étant destinés à plusieurs services de télécommunication et dans lequel des multiplexeurs (Mux 2, Mux 3, Mux 4) sont prévus chez l'abonné, en vue d'assembler les signaux qu'il faut transmettre au central en provenance de ses appareils terminaux d'abonné (C, F2), sous forme de signaux numériques, pour créer un premier signal multiplex temporel · d'abonné, caractérisé en ce que le système de transmission a une configuration telle:
   - qu'au moins un canal est affecté à chacun des abonnés (Tln 1 à Tln 10), en fonction des besoins en communication de celui-ci pour la transmission de signal du central aux abonnés;
   - que, dans chaque canal, les signaux des services de télécommunication sont transmis sous forme numérique et en multiplexage temporel;
   - que les abonnés sont rassemblés par groupes;
   - que, pour chaque groupe d'abonnés, les signaux numériques des canaux globalement affectés au groupe, sont transmis à partir du central, par l'intermédiaire d'un seul guide d'onde lumineuse (LWL) jusqu'à un point de distribution commun (E1) pour le groupe, sous forme d'un signal multiplex;
   - qu'au point de distribution, le signal multiplex est réparti dans les canaux après conversion opto-électrique (E1), (Demux 2);
   - qu'au point de distribution, les signaux des canaux affectés à chacun des abonnés sont assemblés (Mux 5) pour former un deuxième signal multiplex temporel d'abonné et que ce signal est transmis à l'abonné par l'intermédiaire d'un conducteur électrique propre à l'abonné (KL1) et qu'il est transmis chez l'abonné à au moins un point de raccordement (20) sur lequel les signaux destinés aux appareils terminaux prévus sur le point de raccordement peuvent être extraits au moyen de démultiplexeurs (Demux 3, Demux 4, Demux 5, Demux 6);
   - que le premier signal multiplex temporel d'abonné réalisé chez un abonné, est transmis jusqu'au point de distribution;
   - qu'au point de distribution, les premiers signaux multiplex temporel d'abonné du groupe d'abonnés sont assemblés (Mux 1) pour former un signal multiplex de canal de retour, qu'un émetteur optique (S2) envoie à destination du central, sous forme d'un signal optique, par l'intermédiaire d'un guide d'onde lumineuse (LWL); et
   - que le signal optique reçu au central est à nouveau converti (E2) en un signal électrique et subdivisé par un démultiplexeur (Demux 1) pour former les signaux des abonnés et des services de télécommunication dont ils disposent.

2. Système selon la revendication 1, caractérisé en ce que les signaux des canaux sont transmis à partir du central jusqu'au point de distribution par multiplexage temporel ou bien par multiplexage à répartition temporelle et en longueur d'onde.

3. Système selon la revendication 1 ou 2, caractérisé en ce que le nombre des abonnés d'un groupe est inférieur ou égal au nombre des canaux qui sont affectés à ce groupe d'abonnés pour le sens de transmission allant du central aux abonnés.

4. Système selon la revendication 3, caractérisé en ce que le nombre des abonnés d'un groupe est adapté à la capacité de transmission exigée pour les abonnés individuels et à la qualité du signal.

5. Système selon l'une des revendications 1 à 4, caractérisé en ce que, pour la transmission du signal multiplex temporel du canal de retour, on emploie le même guide d'onde lumineuse (LWL) que pour la transmission à partir du central jusqu'au point de distribution.

6. Système selon l'une des revendications 1 à 4, caractérisé en ce que, pour la transmission du signal multiplex temporel du canal de retour, à partir du point de distribution jusqu'au central, on emploie un deuxième guide d'onde lumineuse.